(19) Europäisches Patentamt
European Patent Office
Office européen des brevets

(11) **EP 2 596 392 B1**

(12) **FASCICULE DE BREVET EUROPEEN**

(45) Date de publication et mention
de la délivrance du brevet:
**17.12.2014 Bulletin 2014/51**

(51) Int Cl.:
**G02B 5/30** *(2006.01)*     **G02B 27/28** *(2006.01)*
**G02F 1/01** *(2006.01)*

(21) Numéro de dépôt: **11754442.9**

(22) Date de dépôt: **18.07.2011**

(86) Numéro de dépôt international:
**PCT/FR2011/051716**

(87) Numéro de publication internationale:
**WO 2012/017159 (09.02.2012 Gazette 2012/06)**

(54) **CONVERTISSEUR DE POLARISATION A SYMÉTRIE CYLINDRIQUE BIDIRECTIONNEL ET PROCÉDÉ DE CONVERSION DE POLARISATION CARTÉSIEN-CYLINDRIQUE**

POLARISATIONSWANDLER MIT BIDIREKTIONALER ZYLINDRISCHER SYMMETRIE UND UMWANDLUNGSVERFAHREN FÜR KARTESISCH-ZYLINDRISCHE POLARISATION

POLARIZATION CONVERTER OF BIDIRECTIONAL CYLINDRICAL SYMMETRY AND CARTESIAN-CYLINDRICAL POLARIZATION CONVERSION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2010 FR 1055839**

(43) Date de publication de la demande:
**29.05.2013 Bulletin 2013/22**

(73) Titulaire: **Horiba Jobin Yvon S.A.S.**
**91160 Longjumeau (FR)**

(72) Inventeurs:
• **AUZAS, Frédéric**
  **F-75014 Paris (FR)**
• **ACHER, Olivier**
  **F-91190 Gif-sur-Yvette (FR)**

(74) Mandataire: **Coralis Harle**
**14-16 Rue Ballu**
**75009 Paris (FR)**

(56) Documents cités:
**EP-A2- 0 419 257     WO-A1-2008/071822**

• **STALDER M ET AL: "LINEARLY POLARIZED LIGHT WITH AXIAL SYMMETRY GENERATED BY LIQUID-CRYSTAL POLARIZATION CONVERTERS", OPTICS LETTERS, OSA, OPTICAL SOCIETY OF AMERICA, WASHINGTON, DC, US, vol. 21, no. 23, 1 décembre 1996 (1996-12-01), pages 1948-1950, XP000639753, ISSN: 0146-9592**
• **SPIE, PO BOX 10 BELLINGHAM WA 98227-0010 USA, vol. 6290, 25 août 2006 (2006-08-25), XP040228043,**
• **RUMIKO YAMAGUCHI ET AL: "LIQUID CRYSTAL POLARIZERS WITH AXIALLY SYMMETRICAL PROPERTIES", JAPANESE JOURNAL OF APPLIED PHYSICS, JAPAN SOCIETY OF APPLIED PHYSICS, JP, vol. 28, no. 9, PART 01, 1 septembre 1989 (1989-09-01), XP000072816, ISSN: 0021-4922, DOI: DOI:10.1143/JJAP.28.1730**
• **SPIE, PO BOX 10 BELLINGHAM WA 98227-0010 USA, vol. 7050, 28 août 2008 (2008-08-28), XP040441640,**

**Description**

La présente invention concerne un système optique convertisseur de polarisation. Plus précisément, l'invention concerne un système optique bidirectionnel pour convertir, suivant un premier sens de propagation, un faisceau de polarisation spatialement uniforme en un faisceau ayant une distribution d'états de polarisation de symétrie cylindrique autour d'un axe optique, ledit système optique étant apte à convertir, suivant un sens de propagation inverse, un faisceau ayant une distribution d'états de polarisation de symétrie cylindrique généralisée autour d'un axe optique en un faisceau de polarisation spatialement uniforme. Le convertisseur de polarisation cartésien-cylindrique de l'invention est de préférence achromatique.

Un grand nombre d'appareils de métrologie optique, tels que les polarimètres, ellipsomètres *etc.,* utilisent les propriétés spécifiques de la lumière polarisée dans l'interaction lumière-matière. L'instrumentation scientifique exploite notamment la lumière polarisée émise par des sources lasers, le plus souvent polarisées linéairement. Des techniques d'imagerie utilisent aussi les propriétés de la lumière polarisée pour améliorer le contraste des images. Ainsi un microscope à contraste de phase ou à contraste interférentiel incorpore un élément biréfringent pour séparer un faisceau lumineux en deux faisceaux ayant des états de polarisation respectivement perpendiculaires entre eux puis pour les recombiner de manière à soustraire la contribution du fond et améliorer le contraste de l'image.

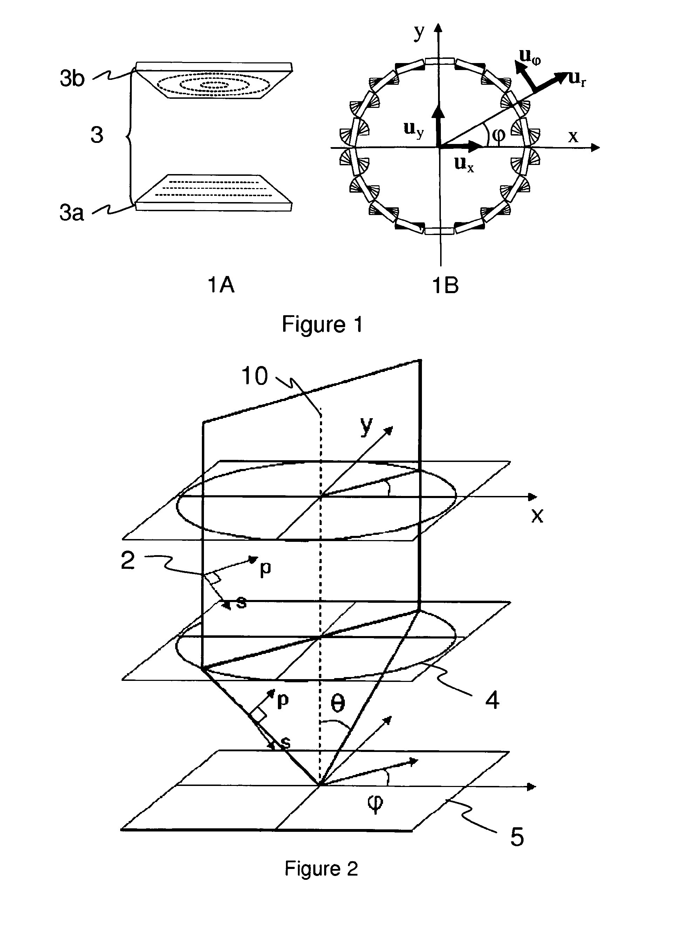

Le plus souvent, on utilise un faisceau lumineux de polarisation homogène spatialement, ce faisceau polarisé étant généré directement par une source (laser par exemple) ou par la combinaison d'une source non polarisée et d'un ou plusieurs composants optiques (polariseur, lame à retard, rotateur de polarisation...). L'état de polarisation pour un faisceau ayant une distribution d'état de polarisation homogène spatialement peut alors se décrire par ses coordonnées dans une base de vecteurs définissant les deux axes perpendiculaires d'un repère cartésien (x, y) dans un plan d'onde perpendiculaire à l'axe optique du faisceau (cf. figure 1 B).

Or, de plus en plus d'applications cherchent à utiliser une lumière polarisée hétérogène spatialement. Dans ce cas, la polarisation du faisceau est une distribution non homogène d'états de polarisation, le plus souvent avec une symétrie de révolution (polarisation radiale ou azimutale par exemple) pour laquelle une base de coordonnées polaires (r, φ) est plus adaptée (Fig. 1 B). En effet, il a été démontré que la focalisation d'un faisceau de polarisation radiale permet d'atteindre une taille de faisceau inférieure au diamètre de limite de focalisation d'un faisceau non polarisé, ce qui s'avère une avancée majeure en micro-lithographie par exemple.

L'attrait pour les faisceaux possédant une distribution radiale ou azimutale d'états de polarisation, s'accompagne d'une demande de composants permettant de convertir une distribution homogène d'états de polarisation en une distribution hétérogène d'états de polarisation.

Différents composants ont été développés pour convertir un faisceau de polarisation linéaire spatialement uniforme en un faisceau ayant une distribution de polarisation soit radiale soit azimutale. Les composants disponibles sont basés sur différentes technologies :

- une première catégorie comprend des composants formés d'un assemblage de secteurs de lames à retard dont les axes sont distribués angulairement de manière à modifier localement la polarisation du faisceau incident. Ainsi, le brevet US2007/0115551 décrit un composant comprenant huit secteurs angulaires distincts. Cependant, ce type de composants ne permet pas d'obtenir une distribution spatiale continue d'états de polarisation.

- une seconde catégorie regroupe des composants optiques basés sur des combinaisons de motifs de réseaux de diffraction, tels que ceux décrits dans le brevet US7,570,427B1 ou dans la publication M. Lerman and U. Levy, « Generation of a radially polarized light beam using space-variant subwavelength gratings at 1064 nm », Optics Letters 33, n° 23, pp. 2783-2784,2008.

- Enfin, il existe des composants à base de cristaux liquides. La publication M. Stalder and M. Schadt (Linearly polarized light with axial symmetry generated by liquid-crystal polarization converters, Optics Letters Vol. 21, n° 23, pp. 1948-1950 ,1996) décrit un convertisseur de polarisation radial et azimutal basé sur une cellule à cristaux liquides, qui permet de transformer un faisceau lumineux polarisé linéairement et spatialement uniforme en un faisceau lumineux de polarisation soit radiale soit azimutale, selon que l'orientation de la polarisation linéaire incidente est soit parallèle ou soit perpendiculaire à un axe d'alignement de la cellule à cristaux liquides. La publication de S-W. Ko, C. Ting, A. Fuh and T. Lin « Polarization converters based on axially symmetric twisterd nematic liquid crystal », Optics express, 18, p 3601, 2010, décrit un composant qui a les memes propriétés.

La publication Stalder et Schadt décrit en particulier une cellule à cristaux liquides comprenant deux couches principales de cristaux liquides agencées comme suit : une première couche dont l'orientation est telle que ses cristaux liquides sont alignés de manière parallèle entre eux et une seconde couche dont les cristaux liquides sont déposés en cercles concentriques (cf Fig. 1 A). Les cristaux liquides intermédiaires entre ces deux couches d'extrémités pivotent graduellement entre ces deux états finaux (cf Fig. 1 B). Dans la publication de Ko et al., la seconde couche de cristaux liquide est orientée de manière radiale.

**EP 2 596 392 B1**

Les composants à cristaux liquides offrent l'avantage de pouvoir être réalisés assez facilement suivant des configurations très variables. De manière générale, les composants optiques à base de cristaux liquides sont réalisés par des techniques de « rubbing » et de photo-alignement.

Cependant, il est important de noter ici que les différents convertisseurs de polarisation existants réalisent la conversion de polarisation pour des conditions particulières où le faisceau incident est polarisé linéairement et aligné soit parallèlement soit perpendiculairement à un axe propre du convertisseur. Un état de polarisation linéaire parallèle à soit l'un soit l'autre des deux axes propres du convertisseur donne bien après conversion dans la base polaire une distribution soit radiale ou soit azimutale de polarisation.

L'utilisation de faisceaux ayant une distribution d'états de polarisation hétérogène spatialement, et en particulier repartis spatialement selon une symétrie cylindrique, est tout particulièrement intéressante lorsqu'un faisceau polarisé est couplé à un système optique dont les propriétés optiques sont à symétrie de révolution (lentilles optiques, objectifs de microscope, ou fibre optique par exemple). En effet, dans le cas où un faisceau en ondes planes de lumière polarisée homogène (linéaire par exemple) éclaire une lentille idéale 4 suivant son axe optique 10, le point image qui se forme dans le plan focal image peut-être décrit en optique géométrique par un ensemble de rayons d'angle d'incidence $\theta$ et de plan d'incidence d'azimuth $\varphi$(cf. figure 2). Cependant, du fait de la symétrie de révolution de la lentille 4 autour de l'axe optique 10, la distribution d'état de polarisation du faisceau est modifiée à la fois par la traversée de la lentille 4 et par la réflexion sur l'échantillon 5, si bien que l'état de polarisation du faisceau incident et réfléchi devient dépendant du plan d'incidence dès le passage à travers la lentille 4. Au contraire, un faisceau présentant une distribution de polarisation soit radiale soit azimutale et centrée sur l'axe 10 d'une lentille 4 de focalisation ne voit pas sa distribution de vecteur de polarisation perturbée par le couplage à la lentille 4 de focalisation. En géométrie cylindrique, chaque plan azimutal est identique lors de la traversée de la lentille. Après passage à travers la lentille 4, la distribution d'états de polarisation reste une distribution de polarisation respectivement soit radiale soit azimutale. La distribution d'états de polarisation soit radiale soit azimutale présente donc l'avantage de n'être pas affectée par la lentille de focalisation 4.

Toutefois, les systèmes convertisseurs de polarisation présentées ci-dessus, ne permettent d'obtenir que certaines distributions spatiales de polarisation et ne fonctionnent que dans des conditions particulières d'utilisation : à partir d'un faisceau polarisé linéairement de manière uniforme et orienté suivant un axe du convertisseur, on peut obtenir une distribution de polarisation soit radiale soit azimutale.

Par contre, à partir d'un faisceau ayant un état de polarisation elliptique dont la distribution spatiale est uniforme, un convertisseur radial de polarisation selon l'art antérieur génère généralement un faisceau ayant une distribution d'état de polarisation de symétrie cylindrique, mais dont l'état de polarisation n'est plus l'état elliptique initial. De plus, l'état de polarisation à symétrie cylindrique obtenu en sortie dépend aussi beaucoup de la longueur d'onde. Il n'existe pas de composant permettant d'opérer pour toute la base d'états de polarisation, un changement de base ou une bijection des coordonnées cartésiennes vers les coordonnées polaires et inversement.

Dans le domaine technique des faisceaux polarisés à distribution non uniforme, on parle en particulier de faisceaux polarisés à distribution d'états de polarisation de type à symétrie cylindrique (Cylindrical Vector Beams ou CV Beams en anglais). Les faisceaux à polarisation radiale ou azimutale sont deux cas particuliers de faisceaux à symétrie cylindrique, dans lesquels l'état de polarisation est linéaire et l'axe de polarisation est distribué soit radialement soit azimutalement par rapport à l'axe optique du faisceau. Il existe d'autres faisceaux présentant une distribution d'état de polarisation de symétrie cylindrique. On trouve premièrement les faisceaux de polarisation linéaire dont l'axe de polarisation présente un angle constant par rapport à l'axe radial local. De tels faisceaux sont par exemple obtenus par une combinaison linéaire sans déphasage entre deux composantes **p** et **s**. On trouve aussi des faisceaux de polarisation elliptique à symétrie cylindrique, la distribution de polarisation comprenant des états de polarisation d'ellipticité uniforme spatialement et dont l'axe de l'ellipse est incliné d'un angle constant par rapport à l'angle radial local.

Un faisceau polarisé de symétrie cylindrique de type généralisé est un faisceau ayant une distribution d'états de polarisation à symétrie cylindrique qui ne se limite pas à une polarisation radiale ni à une polarisation azimutale.

Il n'existe pas de convertisseur de polarisation apte à générer une distribution d'états de polarisation quelconques à symétrie cylindrique généralisée (CV beam) à partir d'un faisceau ayant une distribution uniforme d'état de polarisation. Inversement, il n'existe pas de convertisseur de polarisation apte à recevoir un faisceau de polarisation à symétrie cylindrique de type généralisé et à le convertir en un faisceau de polarisation spatialement uniforme.

La présente invention a pour but de remédier à ces inconvénients et concerne plus particulièrement un convertisseur de distribution spatiale d'état de polarisation cartésien-cylindrique bidirectionnel apte à convertir suivant une première direction de propagation un faisceau ayant une distribution spatiale uniforme d'état de polarisation en un faisceau ayant une distribution spatiale d'état de polarisation à symétrie cylindrique de type généralisé et ledit convertisseur cartésien-cylindrique étant apte à convertir suivant une seconde direction de propagation un faisceau ayant une distribution spatiale d'état de polarisation à symétrie cylindrique de type généralisé en un faisceau ayant une distribution spatiale uniforme d'état de polarisation.

Selon l'invention, le convertisseur cartésien-cylindrique comprend :

- un convertisseur radial et azimutal de polarisation ayant un axe de symétrie, ledit convertisseur radial et azimutal de polarisation étant apte à recevoir un faisceau polarisé linéairement de distribution de polarisation spatialement uniforme pour le convertir en un faisceau ayant une distribution de polarisation à symétrie radiale ou azimutale, et

- des moyens optiques de compensation de la retardance induite par ledit convertisseur radial et azimutal de polarisation, lesdits moyens optiques de compensation étant aptes à introduire un déphasage spatialement uniforme d'amplitude égale à -χ de manière à compenser l'amplitude du déphasage χ introduit par ledit convertisseur de polarisation radial et azimutal.

Selon un mode de réalisation préféré de l'invention :

- le convertisseur radial et azimutal de polarisation comprend une première face de symétrie cartésienne et une seconde face de symétrie circulaire et lesdits moyens optiques de compensation ayant des axes propres de polarisation sont disposés du côté de la face cartésienne du convertisseur radial et azimutal de polarisation, les axes propres des moyens optiques de compensation étant alignés par rapport aux axes propres de ladite face cartésienne ;

- le convertisseur radial et azimutal de polarisation comprend un convertisseur à cristaux liquides ayant une première face présentant un alignement rectiligne de cristaux liquides et une seconde face présentant un alignement suivant des cercles concentriques de cristaux liquides ;

- les moyens optiques de compensation comprennent une lame biréfringente ayant deux axes propres, ladite lame biréfringente étant apte à introduire une retardance entre des polarisations linéaires orientées selon ses axes propres, ladite lame biréfringente étant disposée du côté de la première face cartésienne dudit convertisseur radial et azimutal.

Selon différents aspects de modes de réalisation de l'invention :

- la lame biréfringente a une épaisseur apte à compenser la retardance du convertisseur radial et azimutal de polarisation sur une gamme de longueurs d'onde, de manière à rendre le convertisseur de polarisation cartésien-cylindrique achromatique sur ladite gamme de longueurs d'onde ;

- les moyens optiques de compensation comprennent une cellule à cristaux liquides.

La présente invention concerne également un système optique comprenant un convertisseur de polarisation cartésien-cylindrique selon un mode de réalisation de l'invention et comprenant en outre selon différents aspects de l'invention :

- au moins un filtre séparateur de polarisation ;

- au moins une lentille optique centrée sur l'axe de symétrie du convertisseur radial de polarisation, la lentille étant disposée du côté d'une face cylindrique du convertisseur radial.

La présente invention concerne également un objectif de microscope convertisseur cartésien-cylindrique d'état de polarisation comprenant un convertisseur de polarisation cartésien-cylindrique selon l'un des modes de réalisation précédents et une monture mécanique adaptée pour être fixée sur un microscope.

Enfin, la présente invention concerne également un procédé de conversion de polarisation cartésien-cylindrique utilisant un convertisseur radial et azimutal de polarisation et des moyens optiques de compensation de la retardance entre les polarisations radiales et azimutales induite par ledit convertisseur radial et azimutal de polarisation, lesdits moyens optiques de compensation étant aptes à introduire un déphasage spatialement uniforme d'amplitude égale à -χ de manière à compenser l'amplitude du déphasage χ introduite par ledit convertisseur de polarisation radial et azimutal, pour convertir suivant une première direction de propagation un faisceau ayant une distribution spatiale uniforme d'état de polarisation en un faisceau ayant une distribution spatiale à symétrie cylindrique du même état de polarisation de type généralisé et/ou pour convertir suivant une seconde direction de propagation un faisceau ayant une distribution spatiale d'état de polarisation à symétrie cylindrique de type généralisé en un faisceau ayant une distribution spatiale uniforme avec le même état de polarisation.

L'invention trouvera une application particulièrement avantageuse dans les domaines de l'ellipsométrie résolue spatialement, de la micro-ellipsométrie, de la microscopie à contraste ellipsométrique, de la microscopie à contraste de champ ou encore de la microscopie en lumière polarisée.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1A représente schématiquement une vue éclatée d'un convertisseur radial et azimutal selon l'art antérieur et la figure 1B représente l'expression d'une base des états de polarisation dans un repère cartésien et cylindrique ;

- la figure 2 représente un schéma de principe de la propagation d'un faisceau polarisé après double traversée d'un objectif et réflexion sur un échantillon ;
- la figure 3 représente schématiquement l'effet d'un convertisseur radial et azimutal de polarisation sur différents états de polarisation ;
- la figure 4 représente schématiquement l'effet d'un convertisseur de polarisation selon l'invention sur différents états de polarisation ;
- la figure 5 représente schématiquement une vue en perspective d'un système optique convertisseur de polarisation selon un mode de réalisation de l'invention ;
- la figure 6 représente schématiquement une vue en coupe d'un objectif de microscope intégrant un système convertisseur de polarisation selon un mode de réalisation de l'invention ;
- la figure 7 représente une courbe de mesure du déphasage introduit par un convertisseur radial et azimutal et une courbe du déphasage d'une lame biréfringente de compensation ;
- la figure 8 représente une courbe de déphasage résiduel en fonction de la longueur d'onde.

Nous analysons tout d'abord le fonctionnement d'un convertisseur de polarisation radial et azimutal, par exemple selon le principe décrit par Stalder et Schadt, et représenté schématiquement sur la figure 1A. Un tel convertisseur de polarisation radial 3 utilise une cellule à couches de cristaux liquides ayant une face 3a où les cristaux liquides sont alignés suivant un axe transverse à l'axe optique et une face 3b où les cristaux liquides sont alignés suivant des cercles concentriques de centre O centré sur l'axe optique. Cependant, une cellule à cristaux liquides d'un convertisseur radial 3 produit de la biréfringence en introduisant une différence de marche ente les deux polarisations alignées suivant les axes propres du convertisseur (axe ordinaire d'indice $n_o$ et axe extraordinaire d'indice ne). La valeur de cette différence de marche, aussi appelée retardance, est le produit de la différence $\Delta \mathbf{n} = \mathbf{n}_e - \mathbf{n}_o$, par l'épaisseur d des couches de cristaux liquides traversées. Cette différence de marche introduit un déphasage $\chi$ entre les deux polarisations alignées suivant les axes propres du convertisseur, qui dépend de la longueur d'onde $\lambda$. Le déphasage $\chi$ est donné par la formule classique :

$$\chi = \frac{2 \cdot \pi \cdot d \cdot \Delta n}{\lambda} \qquad (I)$$

La figure 1B représente l'expression d'une base des états de polarisation dans un repère cartésien et cylindrique. On a représenté sur ce repère l'orientation des cristaux entre les deux couches extrêmes selon leur distribution. L'effet de la traversée du convertisseur de polarisation radial 3 peut s'exprimer sous la forme d'une matrice de Jones de transfert à travers un composant tel que décrit dans la publication Stalder et Schadt. En exprimant l'état de initial et l'état de polarisation final dans la base (x,y), cette matrice de Jones s'écrit :

$$J_{x,y} = \begin{bmatrix} 1 & 0 \\ 0 & e^{j \cdot \chi} \end{bmatrix} \begin{bmatrix} \cos \varphi & 0 \\ 0 & \sin \varphi \end{bmatrix}$$

En exprimant l'état de polarisation initiale dans la base (x,y) et l'état de final dans la base cylindrique, cette matrice de Jones s'écrit :

$$J_{x,y \longrightarrow \rho, \varphi} = \begin{bmatrix} 1 & 0 \\ 0 & e^{j \cdot \chi} \end{bmatrix}$$

Il apparaît donc un déphasage $\chi$ dû à la traversée du composant.

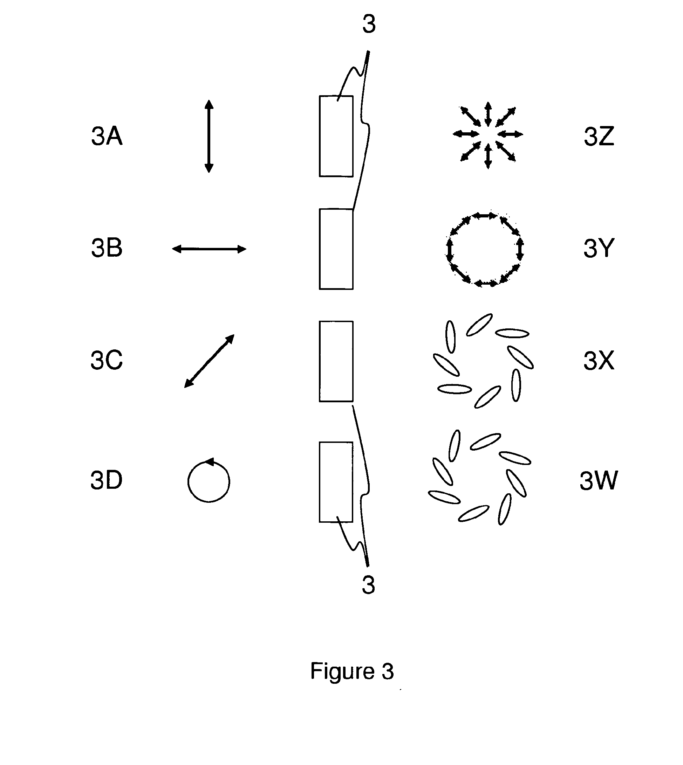

La figure 3 représente schématiquement l'effet d'un convertisseur de polarisation radial et azimutal sur différents états de polarisation dans le sens de propagation de la face « cartésienne » 3a vers la face « cylindrique » 3b.

On a representé sur la figure 3A, l'effet de la traversée du convertisseur radial sur un faisceau incident polarisé linéairement et aligné parallèlement à l'axe propre de la face d'entrée 3a, le faisceau incident ayant une distribution spatiale uniforme d'état de polarisation (représenté graphiquement à gauche du convertisseur par une flèche verticale). En sortie du convertisseur radial 3, côté face « cylindrique », on obtient à la fig. 3Z un faisceau polarisé linéairement et dont la distribution spatiale d'état de polarisation est radiale (représentée graphiquement à droite du convertisseur).

Sur la figure 3B, on a représenté la transformation d'un faisceau incident polarisé linéairement et aligné perpendiculairement à l'axe propre de la face d'entrée 3a, le faisceau incident ayant une distribution spatiale uniforme d'état de polarisation (représenté graphiquement à gauche du convertisseur par une flèche horizontale). En sortie du convertisseur radial 3, côté face « cylindrique », on obtient à la fig. 3Y un faisceau polarisé linéairement et dont la distribution spatiale d'état de polarisation est azimutale.

La figure 3C représente graphiquement la transformation d'un faisceau incident polarisé linéairement et incliné par rapport à l'axe propre de la face d'entrée 3a du convertisseur radial (c'est-à-dire une combinaison linéaire des polarisations parallèle de la figure 3A et perpendiculaire de la figure 3B). En sortie du convertisseur radial 3, côté face « cylindrique », on obtient à la fig. 3X un faisceau polarisé non pas linéairement mais elliptiquement (du fait du déphasage induit par le convertisseur radial 3). La distribution du faisceau de la figure 3C en sortie du convertisseur radial présente une symétrie de révolution, il s'agit donc d'un faisceau polarisé à symétrie de type cylindrique de révolution (CV Beam).

La figure 3D représente graphiquement la transformation d'un faisceau incident polarisé circulairement. En sortie du convertisseur radial 3, côté face « cylindrique », on obtient à la fig. 3W un faisceau polarisé non pas circulairement mais elliptiquement du fait du déphasage induit par le convertisseur radial 3.

Une première constatation faisant partie de l'invention est qu'un convertisseur radial et azimutal ne conserve l'état de polarisation que pour un état de polarisation linéaire soit parallèle soit perpendiculaire à un axe propre du convertisseur radial 3.

L'invention propose un système optique permettant d'opérer complètement le passage d'un état de polarisation suivant un repère cartésien vers le même état de polarisation suivant un repère en coordonnées polaires et cela quel que soit l'état de polarisation du faisceau incident.

Suivant un premier mode de réalisation, le système optique convertisseur de polarisation 7 de l'invention comprend un convertisseur de polarisation radial 3 couplé à des moyens de compensation qui introduisent un déphasage $\chi'$ sensiblement opposé au déphasage $\chi$ introduit par ledit convertisseur de polarisation radial 3, soit $\chi + \chi' \approx 0$.

En exprimant l'état de polarisation initial et l'état de polarisation final dans la base (x,y), la matrice de Jones du convertisseur selon l'invention s'écrit :

$$J_{x,y} = \begin{bmatrix} 1 & 0 \\ 0 & e^{j\cdot(\chi+\chi')} \end{bmatrix} \begin{bmatrix} \cos\varphi & 0 \\ 0 & \sin\varphi \end{bmatrix} \approx \begin{bmatrix} \cos\varphi & 0 \\ 0 & \sin\varphi \end{bmatrix}$$

En exprimant l'état de polarisation initial dans la base (x,y) et l'état de polarisation final dans la base cylindrique, cette matrice de Jones s'écrit :

$$J_{x,y \longrightarrow \rho,\varphi} = \begin{bmatrix} 1 & 0 \\ 0 & e^{j\cdot(\chi+\chi')} \end{bmatrix} \approx \begin{bmatrix} 1 & 0 \\ 0 & 1 \end{bmatrix}$$

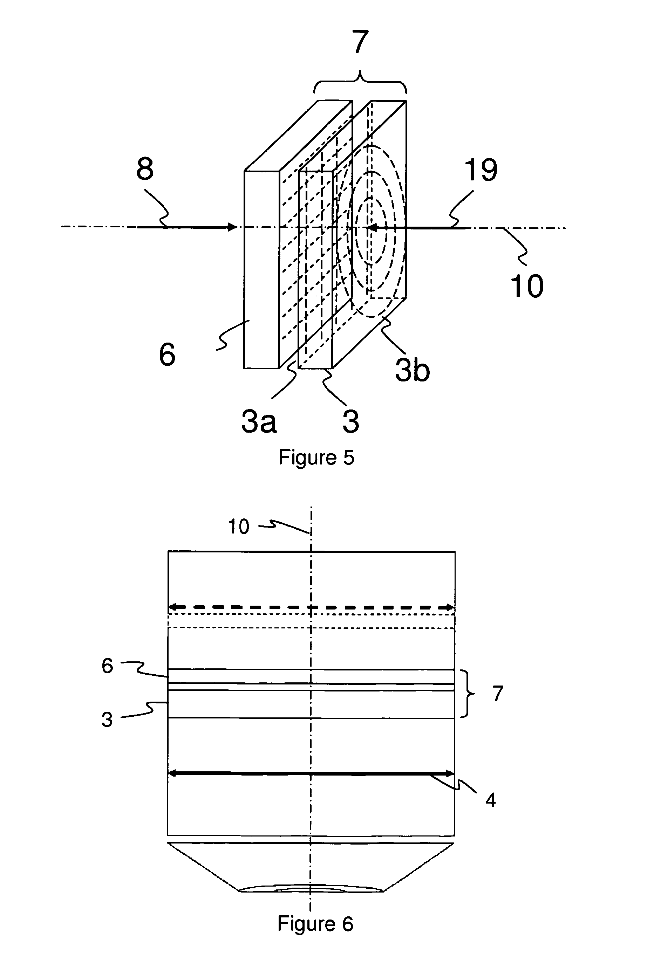

La figure 5 représente un système convertisseur de polarisation suivant le mode de réalisation préféré de l'invention. Le système convertisseur de polarisation 7 comprend des moyens de compensation du déphasage et un convertisseur radial de polarisation 3 centré sur l'axe optique 10. Les moyens de compensation du déphasage comprennent une lame retard 6 positionnée devant le convertisseur de polarisation radial 3 du côté du faisceau de polarisation uniforme 8 et de la face « cartésienne » 3a du convertisseur radial et azimutal 3. La lame à retard 6 peut être une lame à retard fixe, ou lame dite multi-ordre, dont la retardance $\Delta$n.d est correctement calculée en choisissant le matériau et l'épaisseur nécessaire à la conversion de polarisation ou encore être constituée d'une couche de cristaux liquides identiques à ceux du convertisseur de polarisation radial 3, les cristaux liquides de la lame à retard étant disposés entre deux faces orientées linéairement. L'orientation de la couche de cristaux liquides de la lame retard 6 est alors choisie comme étant perpendiculaire à celle de la face 3a du convertisseur radial 3 pour laquelle les cristaux liquides sont parallèles entre eux (cf. figure 5). De cette façon, les axes propres extraordinaires et ordinaires d'une cellule de cristaux liquides se trouvent permutés dans la suivante.

Un convertisseur radial et azimutal à cristaux liquides connu peut être fourni avec une lame à retard qui couvre une moitié de ce convertisseur. Cette lame de compensation a une retardance généralement réglable, de façon à pouvoir fixer sa valeur à $\lambda/2$, où $\lambda$ est la longueur d'onde de travail choisie par l'utilisateur. Une telle lame retard a pour fonction de changer le sens de l'état de polarisation, sans changer sa direction. En effet, on observe que le rayonnement d'état de polarisation radial ou azimutal produit en sortie, a un état de phase qui est constant sur chaque moitié du composant, mais qui diffère d'un angle $\pi$ entre chacune de ces moitiés. Cette distribution de phase « à symétrie semi-cylindrique » peut être nuisible dans certaines applications. Pour obtenir une distribution de phase à symétrie cylindrique, il est connu de rajouter une lame retard de compensation, présentant une retardance de λ/2. Une lame telle lame de compensation (dite lame λ/2) n'a nullement pour effet de compenser la retardance introduite par le convertisseur radial entre les différentes composantes de la polarisation qui le traversent en un même point. Nous soulignons d'une part que la lame retard intervenant dans l'invention couvre toute la surface du convertisseur radial et azimutal, et non une moitié ; et d'autre part qu'elle présente dans l'exemple cité une retardance nettement supérieure à λ/2 (et même supérieure à 5 λ/2).

Au contraire, selon l'invention, le retard introduit par la lame 6 est choisi de façon à introduire une différence de marche entre son axe lent et son axe rapide, identique à la retardance Δn.d apporté par le convertisseur radial et azimutal. De plus, l'orientation de la lame 6 est choisie de façon à ce que son axe lent coïncide avec l'axe rapide du convertisseur radial et azimutal, de façon à ce que les différence de marche entre les polarisations se compensent pour un rayon qui traverse la lame retard 6 et le convertisseur radial et azimutal 3. De cette manière, la traversée de la lame retard 6 introduit un déphasage qui compense celui introduit par le convertisseur radial de polarisation, cela pour chacune des longueurs d'onde.

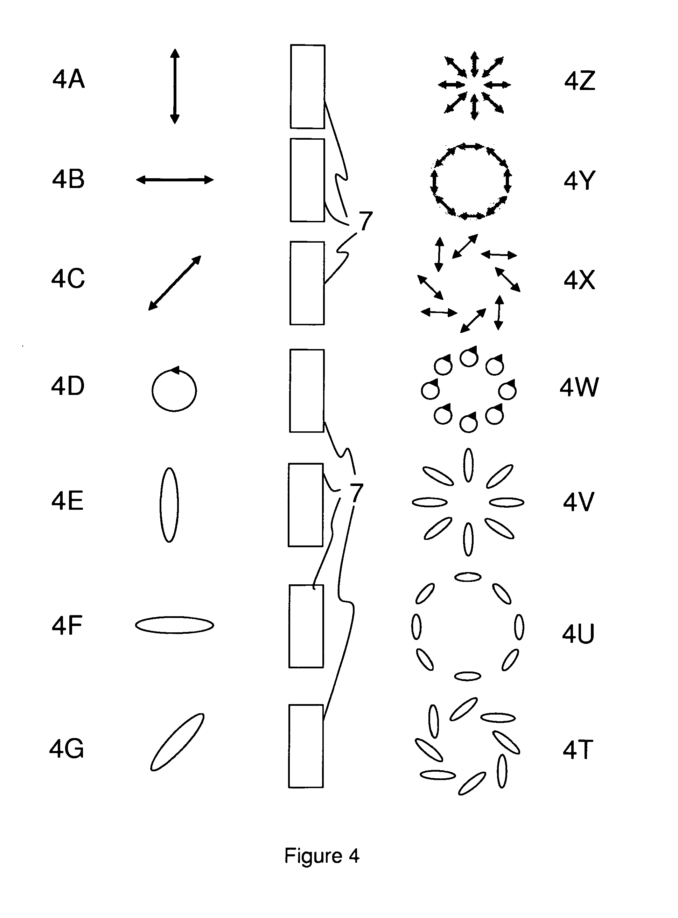

La figure 4 représente schématiquement l'effet d'un convertisseur de polarisation selon l'invention sur différents états de polarisation dans le sens de propagation d'un repère cartésien vers un repère cylindrique.

On a representé sur la figure 4A, l'effet de la traversée du convertisseur 7 de l'invention sur un faisceau incident polarisé linéairement et aligné parallèlement à un axe propre de la face d'entrée cartésienne du convertisseur 7, le faisceau incident ayant une distribution spatiale uniforme d'état de polarisation (représenté graphiquement à gauche du convertisseur par une flèche verticale). En sortie du convertisseur 7, côté repère cylindrique, on obtient à la fig. 4Z un faisceau polarisé linéairement et dont la distribution spatiale d'état de polarisation est radiale (représentée graphiquement à droite du convertisseur).

Sur la figure 4B, on a représenté la transformation d'un faisceau incident polarisé linéairement et aligné perpendiculairement à un axe propre de la face d'entrée cartésienne du convertisseur 7, le faisceau incident ayant une distribution spatiale uniforme d'état de polarisation (représenté graphiquement à gauche du convertisseur par une flèche horizontale). En sortie du convertisseur 7, côté repère cylindrique, on obtient à la fig. 4Y un faisceau polarisé linéairement et dont la distribution spatiale d'état de polarisation est azimutale.

La figure 4C représente graphiquement la transformation d'un faisceau incident polarisé linéairement et incliné à 45 degrés par rapport à un axe propre de la face d'entrée cartésienne du convertisseur 7 (c'est-à-dire une combinaison linéaire des polarisations parallèle de la figure 4A et perpendiculaire de la figure 4B). En sortie du convertisseur 7, côté repère cylindrique, on obtient à la fig. 4X un faisceau ayant un état de polarisation linéaire, la distribution spatiale de polarisation étant une polarisation linéaire inclinée à 45 degrés par rapport à l'axe radial local. La distribution spatiale d'état de polarisation du faisceau de la figure 4C en sortie du convertisseur 7 présente une symétrie de révolution, il s'agit bien d'un faisceau polarisé à symétrie de type cylindrique de révolution (CV Beam).

La figure 4D représente graphiquement la transformation d'un faisceau incident polarisé circulairement (c'est-à-dire une combinaison linéaire avec un déphasage entre un état de polarisation linéaire parallèle et un état de polarisation linéaire perpendiculaire). En sortie du convertisseur 7, côté repère cylindrique, on obtient à la fig. 4W, un faisceau polarisé circulairement et présentant une symétrie de révolution, il s'agit donc bien d'un faisceau polarisé à symétrie cylindrique (CV Beam).

La figure 4E représente graphiquement la transformation d'un faisceau incident ayant un état de polarisation elliptique dont le grand axe de l'ellipse est aligné suivant un axe propre de la face d'entrée cartésienne du convertisseur 7. En sortie du convertisseur 7, côté repère cylindrique, on obtient à la fig. 4V, un faisceau polarisé elliptiquement. La distribution spatiale de cet état depolarisation est que le grand axe de l'ellipse est localement aligné suivant une direction radiale. La traversée du convertisseur 7 n'induisant pas de déphasage, l'état de polarisation elliptique n'est pas modifié, seule la distribution spatiale, c'est-à-dire l'orientation de l'ellipse est modifiée. On obtient encore fig. 4V un faisceau ayant une distribution d'état de polarisation de symétrie cylindrique autour de l'axe optique (CV Beam).

La figure 4F représente graphiquement la transformation d'un faisceau incident ayant un état de polarisation elliptique dont le grand axe de l'ellipse est travserse à un axe propre de la face d'entrée cartésienne du convertisseur 7. En sortie du convertisseur 7, côté repère cylindrique, on obtient à la fig. 4U, un faisceau polarisé elliptiquement. La distribution spatiale de cet état de polarisation est que le grand axe de l'ellipse est localement aligné suivant une direction azimutale. La traversée du convertisseur 7 n'induisant pas de déphasage, l'état de polarisation elliptique n'est pas modifié, seule la distribution spatiale, c'est-à-dire l'orientation de l'ellipse est modifiée. On obtient également, fig. 4U un faisceau ayant une distribution d'état de polarisation de symétrie cylindrique autour de l'axe optique (CV Beam).

Enfin, la figure 4G représente graphiquement la transformation d'un faisceau incident ayant un état de polarisation elliptique dont le grand axe de l'ellipse est incliné à 45 degrés par rapport à un axe propre de la face d'entrée cartésienne du convertisseur 7. En sortie du convertisseur 7, côté repère cylindrique, on obtient à la fig. 4T, un faisceau polarisé elliptiquement. La distribution spatiale de cet état depolarisation est que le grand axe de l'ellipse est localement incliné de 45 degrés par rapport à la direction radiale. La traversée du convertisseur 7 n'induisant pas de déphasage, l'état de polarisation elliptique n'est pas modifié, seule la distribution spatiale, c'est-à-dire l'orientation de l'ellipse est modifiée. On obtient également, fig. 4T un faisceau ayant une distribution d'état de polarisation de symétrie cylindrique autour de l'axe optique (CV Beam).

On constate donc qu'un convertisseur selon l'invention conserve l'état de polarisation du faisceau aussi bien pour un état de polarisation linéaire, circulaire ou elliptique et quelle que soit son inclinaison par rapport à un axe propre de la face cartésienne du convertisseur 7. On constate ensuite que le système convertisseur de l'invention permet de générer un faisceau à distribution spatiale d'état de polarisation de symétrie cylindrique quel que soit l'état de polarisation du faisceau incident.

Plus généralement, le convertisseur de polarisation permet de passer d'un faisceau ayant un état de polarisation uniforme quelconque à un faisceau ayant une distribution d'état de polarisation de symétrie cylindrique autour d'un axe optique 10.

Avantageusement, la lame retard 6 est composée d'une couche de cristaux liquide orientés parallèlement entre eux mais perpendiculairement à la première couche du convertisseur radial de polarisation, la lame retard étant disposé du côté de la face cartésienne du convertisseur radial et azimutal, ce qui permet d'obtenir une correction parfaitement achromatique du déphasage.

La figure 5 représente le fonctionnement bidirectionnel du convertisseur cartésien-cylindrique. Dans un premier sens de propagation, on dirige un faisceau 8 ayant une distribution d'états de polarisation uniforme spatialement sur la lame retard 6 puis sur sur la face 3a cartésienne du convertisseur radial 3. Le faisceau 8 après avoir traversé le convertisseur radial de polarisation 3 ressort sous la forme d'un faisceau ayant un état de polarisation de symétrie cylindrique autour de l'axe optique 10. Dans le sens de propagation inverse, on dirige un faisceau 9 ayant une distribution d'états de polarisation de symétrie cylindrique autour de l'axe optique 10 sur la face 3b de symétrie de révolution du convertisseur radial 3. Le faisceau 9 après avoir traversé le convertisseur radial de polarisation 3 puis la lame retard 6 ressort sous la forme d'un faisceau ayant un état de polarisation uniforme spatialement, puisque la lame retard 6 compense exactement le déphasage introduit par le convertisseur radial 3.

Par effet de réciprocité, le convertisseur de polarisation 7 de l'invention permet de transformer un faisceau ayant une distribution d'état de polarisation de symétrie cylindrique autour d'un axe optique 10 (ou generalized CV beam) en un faisceau ayant une distribution uniforme d'état de polarisation. Au surplus, l'état de polarisation d'un faisceau est conservé lors de la traversée du convertisseur 7 de polarisation, seule sa distribution spatiale étant modifiée.

Le système convertisseur de polarisation de l'invention est donc un convertisseur bijectif de distribution spatiale d'état de polarisation. Dans un sens de propagation, le convertisseur 7 permet de passer d'un état de polarisation ayant une distribution spatiale uniforme à une distribution spatiale de symétrie cylindrique du même état de polarisation. Dans le sens de propagation inverse, le convertisseur 7 permet de passer d'un faisceau ayant un état de polarisation dont la distribution spatiale est de symétrie cylindrique à un faisceau ayant une distribution spatialement uniforme du même état de polarisation.

Le système de l'invention permet ainsi de modifier la distribution spatiale d'états de polarisation indépendamment de l'état de polarisation du faisceau incident.

Le système de l'invention permet de convertir un faisceau ayant un état de polarisation quelconque et une distribution uniforme d'état de polarisation, en un faisceau ayant une distribution à symétrie cylindrique de ce même état de polarisation.

Le système convertisseur de polarisation de l'invention ne fonctionne pas uniquement dans la direction de propagation pour convertir un faisceau ayant une distribution de polarisation uniforme en coordonnées cartésiennes en un faisceau ayant une distribution d'état de polarisation de symétrie cylindrique.

Dans l'autre sens de propagation de la lumière, le système de l'invention offre l'avantage de permettre également la conversion d'un faisceau ayant une distribution d'état de polarisation à symétrie cylindrique en un faisceau ayant une distribution uniforme dans un repère cartésien de ce même état de polarisation, quel que soit l'état de polarisation du faisceau incident de distribution spatiale à symétrie cylindrique.

Un même convertisseur 7 peut donc être utilisé suivant les deux directions de propagation.

Le système convertisseur de polarisation de l'invention permet ainsi de générer des faisceaux ayant une distribution d'états de polarisation qui n'est pas limitée à une distribution radiale ou une distribution azimutale d'états de polarisation linéaires. Au contraire, le système permet de générer toute combinaison linéaire d'états de polarisation comprenant une composante radiale et une composante azimutale non nulles. Lorsque le retard entre la composante radiale et la composante azimutale est nul, l'état de polarisation résultant reste un état de polarisation linéaire dont la distribution spatiale peut être à symétrie cylindrique, l'orientation de l'axe de polarisation n'étant ni radial ni ortho-radial mais incliné par rapport à la direction radiale d'un angle constant quelle que soit la position locale dans le faisceau. Lorsque le retard entre la composante radiale et la composante azimutale est égal à $\pi/2$, l'état de polarisation résultant est un état de polarisation circulaire (dont la distribution spatiale est à la fois uniforme et de symétrie cylindrique). Lorsque le retard entre la composante radiale et la composante azimutale est supérieur à zéro et inférieur à $\pi/2$, l'état de polarisation résultant est un état de polarisation elliptique, dont la distribution spatiale est à symétrie cylindrique, l'axe de l'ellipse étant incliné d'un angle constant par rapport à la direction locale radiale quelle que soit la position locale dans le faisceau.

La capacité du système de l'invention à fonctionner dans les deux sens de propagation, pour des états quelconques de polarisation permet des applications très intéressantes.

Par exemple, dans une application de microscopie en réflexion (ou en transmission), le trajet retour permet de faire le changement inverse de coordonnées polaires vers les coordonnées cartésiennes. Ainsi, dans cette application, le double passage à travers le système permet de compenser à l'aller comme au retour le déphasage introduit par le convertisseur radial seul et rend le système achromatique.

Le système de l'invention permet alors la réalisation d'un dispositif d'imagerie (microscopie par exemple) présentant un état de polarisation bien maîtrisé et à symétrie cylindrique au travers de la totalité de l'ouverture numérique N.A. d'un objectif tout en conservant la résolution latérale de 1.22 λ / N.A.

Au final, quel que soit l'état de polarisation du faisceau de lumière qui traverse ce nouveau composant 7, il se produit une conversion totale ou une bijection entre la base cartésienne de distribution des états de polarisation et la base polaire de distribution des états de polarisation.

Les applications visées utilisent de préférence une lumière polarisée homogène spatialement de sorte à pouvoir caractériser la conversion.

Comme décrit plus haut, il a été souligné l'importance d'avoir pour certaines applications, des faisceaux de lumière polarisée spatialement hétérogène de symétrie cylindrique lors d'une utilisation dans un système optique dont les propriétés sont à symétrie de révolution (lentilles, objectif de microscope). Il est donc tout naturel d'envisager un composant tel que celui décrit précédemment couplé à un tel système optique avec ou non des diaphragmes de champ ou d'ouverture ou de manière plus générale des filtres spatiaux ou spectraux.

La figure 6 représente un autre mode de réalisation avantageux de l'invention. Plus précisément, la figure 6 représente un objectif de microscope modifié pour intégrer un système convertisseur de polarisation 7 selon l'invention. L'objectif comprend un système optique 4 à lentille et une monture mécanique pour pouvoir être monté à la place d'un objectif standard de microscope.

De manière plus générale, un système convertisseur de polarisation et focalisant comprend un convertisseur de polarisation cartésien-cylindrique 7 combiné à une lentille optique placée devant ou derrière le convertisseur de polarisation, la lentille étant placée côte repère cylindrique du convertisseur 7. Ce système optique permet d'opérer une bijection entre une distribution d'états de polarisations de la base cartésienne et une distribution (non homogène spatialement dans le cas le plus général) des états de polarisation de la base polaire.

Nous présentons maintenant un exemple détaillé d'un convertisseur cartésien-cylindrique selon un mode de réalisation particulier. Cet exemple de réalisation particulière se base sur l'utilisation d'un composant convertisseur de polarisation radial et azimutal 3, fourni par la société Arcoptix, et dont le principe est celui décrit dans la publication de Stalder et Schadt. Nous avons montré que la différence de marche entre une onde transformée en une polarisation radiale, et une onde transformée en une polarization azimutale, est proche de 3285 nm. Cette différence de marche est uniforme sur tout le composant. Nous plaçons une lame 6 biréfringente en quartz devant la totalité du convertisseur radial et azimutal. L'épaisseur D de cette lame de quartz est choisie de sorte que sa retardance soit elle aussi de 3285 nm. La différence Δn entre l'indice ordinaire et extraordinaire du quartz étant typiquement Δn = 0.00925, nous choisissons D.Δn = 3285 nm, ce qui nous donne D tel que D=355nm. Cette lame à retard est placée du côté de la face cartésienne du convertisseur radial, et orientée de sorte que l'axe lent de la lame à retard coïncide avec l'axe rapide de la face cartésienne du convertisseur radial/azimutal. Ainsi, les retardances des deux composants se compensent.

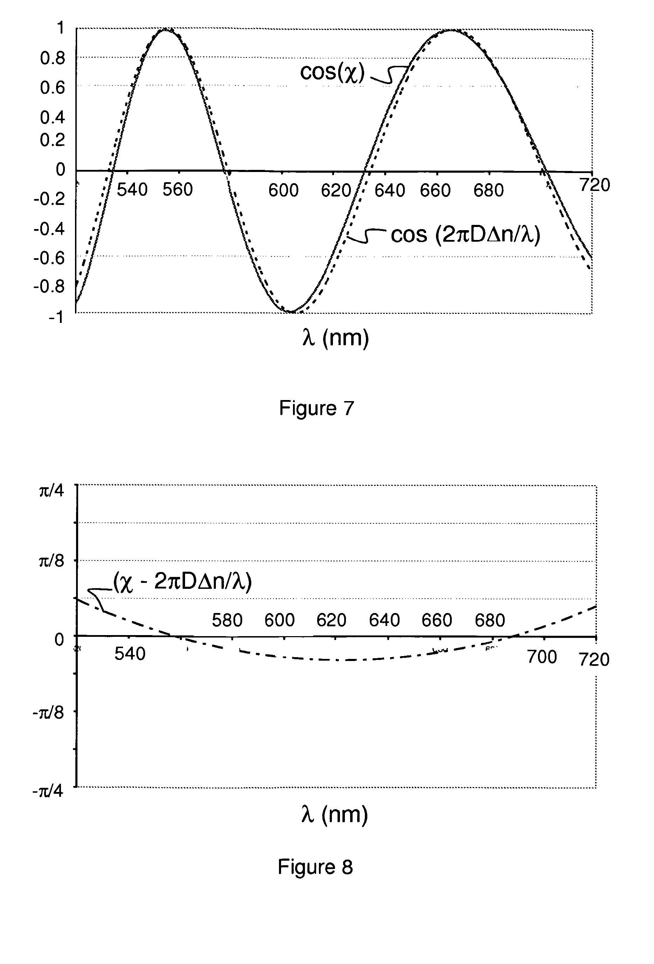

La figure 7 représente une courbe en trait plein, correspondant à une mesure du déphasage χ entre une onde transformée en une polarisation radiale et une onde transformée en une polarisation azimutale par le composant Arcoptix, en fonction de la longueur d'onde λ. La quantité représentée est cos χ. La retardance δ est estimée à 3285 nm, en appliquant la formule :

$$\chi = 2.\pi.\delta/\lambda$$

La figure 7 représente aussi une courbe en trait tireté, correspondant à la courbe cos(2.π.D.Δn/λ) associée au déphasage χ' dû à la biréfringence d'une lame de quartz 6 d'épaisseur 355 μm, en fonction de la longueur d'onde.

La figure 8 représente la quantité χ - 2.π.D.Δn/λ en fonction de la longueur d'onde, cette courbe est associée au déphasage entre une onde transformée en une polarisation radiale et une onde transformée en une polarisation azimutale, par l'assemblage selon la réalisation particulière de l'invention présentée ici. On constate que cet angle exprimé en radian reste faible sur une large plage spectrale, ce qui révèle que le déphasage entre une onde transformée en une polarisation radiale et une onde transformée en une polarisation azimutale est pratiquement nul. Cette propriété permet ensuite d'établir que le convertisseur de polarisation 7 selon ce mode de réalisation de l'invention permet de modifier la distribution spatiale d'un état de polarisation quelconque, pour passer d'une distribution spatialement uniforme à une distribution de symétrie cylindrique et inversement, sans modifier l'état de polarisation du faisceau.

Les applications envisagées concernent des systèmes optiques requérant des propriétés à symétrie de révolution pour lesquels le contrôle parfait de la polarisation est difficile. L'utilisation du système convertisseur de polarisation cartésien-cylindrique de l'invention couplé à une fibre optique permet de maintenir l'état de polarisation en entrée de la fibre, et évite l'utilisation d'une fibre optique à maintien de polarisation.

L'utilisation en microscopie du convertisseur de polarisation cartésien-cylindrique de l'invention permet :

- dans un microscope à contraste interférentiel d'obtenir une amélioration du constate de l'image ;
- de rendre plus accessible les observations à l'angle de Brewster. En effet, les microscopes à angles de Brewster existant possèdent un bras d'illumination et de collection physiquement séparé. L'utilisation de ce composant permettrait un design plus compact, une meilleure image (pas de problème de profondeur de champ) et une plus forte luminosité ;
- de sélectionner un anneau ou un angle d'incidence en sortie de l'objectif par exemple.

Le convertisseur de polarisation cylindrique de l'invention permet d'opérer une bijection entre une distribution d'états de polarisation exprimés dans la base cartésienne et une distribution d'états de polarisation avec symétrie de révolution exprimés dans une base polaire.

Plus précisément, le convertisseur de polarisation de l'invention permet de modifier la distribution spatiale d'un état de polarisation quelconque, pour passer d'une distribution spatialement uniforme à une distribution de symétrie cylindrique et inversement, sans modifier l'état de polarisation du faisceau. On obtient ainsi un convertisseur de distribution spatiale d'état de polarisation à conservation d'état de polarisation qui fonctionne de manière bidirectionnelle quel que soit l'état de polarisation d'un faisceau : linéaire, circulaire ou elliptique et quelle que soit l'orientation transverse de cet état de polarisation relativement aux axes propres du convertisseur.

L'invention trouve des applications dans tous les domaines où l'on chercher à utiliser un faisceau polarisé dans un milieu optique présentant une symétrie de type cylindrique. Tout particulièrement, l'invention vise des applications de microscopie en lumière polarisée, de micro-ellipsométrie, d'ellipsométrie à résolution microscopique, d'imagerie en micro-ellipsométrie...

L'invention s'applique également à d'autres domaines, comme par exemple aux fibres optiques dont la symétrie est également de type cylindrique, par exemple pour coupler un faisceau optique polarisé ayant une distribution d'état de polarisation de symétrie cylindrique de type généralisé à une fibre optique.

## Revendications

1. Convertisseur de distribution spatiale d'état de polarisation cartésien-cylindrique (7) bidirectionnel apte à convertir suivant une première direction de propagation un faisceau ayant une distribution spatiale uniforme d'état de polarisation en un faisceau ayant une distribution spatiale d'état de polarisation à symétrie cylindrique de type généralisé et ledit convertisseur cartésien-cylindrique (7) étant apte à convertir suivant une seconde direction de propagation un faisceau ayant une distribution spatiale d'état de polarisation à symétrie cylindrique de type généralisé en un faisceau ayant une distribution spatiale uniforme d'état de polarisation, ledit convertisseur cartésien-cylindrique (7) comprenant :

   - un convertisseur radial et azimutal de polarisation (3) ayant un axe de symétrie (10), ledit convertisseur radial et azimutal de polarisation (3) étant apte à recevoir un faisceau polarisé linéairement de distribution de polarisation spatialement uniforme pour le convertir en un faisceau ayant une distribution de polarisation à symétrie radiale ou azimutale, et
   - des moyens optiques de compensation (6) de la retardance induite par ledit convertisseur radial et azimutal de polarisation (3), lesdits moyens optiques de compensation (6) étant aptes à introduire un déphasage spatialement uniforme d'amplitude égale à $-\chi$ de manière à compenser l'amplitude du déphasage $\chi$ introduit par ledit convertisseur de polarisation radial et azimutal (3).

2. Convertisseur de distribution spatiale d'états de polarisation cartésien-cylindrique (7) selon la revendication 1 **caractérisé en ce que** le convertisseur radial et azimutal de polarisation (3) comprend une première face de symétrie cartésienne (3a) et une seconde face (3b) de symétrie circulaire et **en ce que** lesdits moyens optiques de compensation (6) ayant des axes propres de polarisation sont disposés du côté de la face cartésienne (3a) du convertisseur radial et azimutal de polarisation (3), les axes propres des moyens optiques de compensation (6) étant alignés par rapport aux axes propres de ladite face cartésienne (3a).

3.  Convertisseur de polarisation cartésien-cylindrique (7) selon la revendication 1 ou 2 **caractérisé en ce que** le convertisseur radial et azimutal de polarisation (3) comprend un convertisseur à cristaux liquides ayant une première face (3a) présentant un alignement rectiligne de cristaux liquides et une seconde face (3b) présentant un alignement suivant des cercles concentriques de cristaux liquides.

4.  Convertisseur de polarisation cartésien-cylindrique (7) selon l'une des revendications 1 à 3 **caractérisé en ce que** les moyens optiques de compensation (6) comprennent une lame biréfringente ayant deux axes propres, ladite lame biréfringente étant apte à introduire une retardance entre des polarisations linéaires orientées selon ses axes propres, ladite lame biréfringente étant disposée du côté de la première face (3a) cartésienne dudit convertisseur radial et azimutal (3).

5.  Convertisseur de polarisation cartésien-cylindrique (7) selon la revendication 4 **caractérisé en ce que** ladite lame biréfringente a une épaisseur apte à compenser la retardance du convertisseur radial et azimutal de polarisation sur une gamme de longueurs d'onde, de manière à rendre le convertisseur de polarisation cartésien-cylindrique achromatique sur ladite gamme de longueurs d'onde.

6.  Convertisseur de polarisation cartésien-cylindrique (7) selon l'une des revendications 1 à 5 **caractérisé en ce que** les moyens optiques de compensation (6) comprennent une cellule à cristaux liquides.

7.  Système optique comprenant un convertisseur de polarisation cartésien-cylindrique (7) selon l'une des revendications 1 à 6, ledit système optique étant **caractérisé en ce qu'**il comprend au moins un filtre séparateur de polarisation.

8.  Système optique comprenant un convertisseur de polarisation cartésien-cylindrique (7) selon l'une des revendications 1 à 6, ledit système optique étant **caractérisé en ce qu'**il comprend au moins une lentille optique (4) centrée sur l'axe de symétrie (10) du convertisseur radial de polarisation (3), la lentille (4) étant disposée du côté d'une face cylindrique (3b) du convertisseur radial (3).

9.  Objectif de microscope convertisseur cartésien-cylindrique d'état de polarisation comprenant un convertisseur de polarisation cartésien-cylindrique (7) selon l'une des revendications 1 à 6 et une monture mécanique adaptée pour être fixée sur un microscope.

10. Procédé de conversion de polarisation cartésien-cylindrique utilisant un convertisseur selon la revendication 7, comprenant un convertisseur radial et azimutal de polarisation (3) et des moyens optiques de compensation (6) de la retardance entre les polarisations radiale et azimutale induite par ledit convertisseur radial et azimutal de polarisation (3), lesdits moyens optiques de compensation (6) étant aptes à introduire un déphasage spatialement uniforme d'amplitude égale à $-\chi$ de manière à compenser l'amplitude du déphasage $\chi$ introduit par ledit convertisseur de polarisation radial et azimutal (3) pour convertir suivant une première direction de propagation un faisceau ayant une distribution spatiale uniforme d'état de polarisation en un faisceau ayant une distribution spatiale à symétrie cylindrique du même état de polarisation et pour convertir suivant une seconde direction de propagation un faisceau ayant une distribution spatiale d'état de polarisation à symétrie cylindrique de type généralisé en un faisceau ayant une distribution spatiale uniforme avec le même état de polarisation.

**Patentansprüche**

1.  Bidirektionaler kartesisch-zylindrischer Wandler (7) für die räumliche Polarisationszustandsverteilung, der geeignet ist, einen Strahl, der eine gleichförmige räumliche Polarisationszustandsverteilung aufweist, entlang einer ersten Ausbreitungsrichtung in einen Strahl umzuwandeln, der eine räumliche Polarisationszustandsverteilung mit allgemein zylindrischer Symmetrie aufweist, und der kartesisch-zylindrische Wandler (7) geeignet ist, entlang einer zweiten Ausbreitungsrichtung einen Strahl, der eine räumliche Polarisationszustandsverteilung mit allgemein zylindrischer Symmetrie aufweist, in einen Strahl umzuwandeln, der eine gleichförmige räumliche Polarisationszustandsverteilung aufweist, wobei der kartesisch-zylindrische Wandler (7) Folgendes umfasst:

    - einen radialen und azimutalen Polarisationswandler (3), der eine Symmetrieachse (10) aufweist, wobei der radiale und azimutale Polarisationswandler (3) geeignet ist, einen linear polarisierten Strahl mit räumlich gleichförmiger Polarisationsverteilung zu empfangen, um ihn in einen Strahl umzuwandeln, der eine Polarisationsverteilung mit radialer oder azimutaler Symmetrie aufweist, und
    - optische Mittel zur Kompensation (6) der durch den radialen und azimutalen Polarisationswandler (3) bewirkten Verzögerung, wobei die optischen Kompensationsmittel (6) geeignet sind, um eine räumlich gleichförmige Phasenverschiebung mit einer Amplitude gleich -χ einzuführen, derart, dass die Amplitude der Phasenverschiebung χ, die durch den radialen und azimutalen Polarisationswandler (3) eingeführt wird, kompensiert wird.

2. Kartesisch-zylindrischer Wandler für die räumliche Verteilung von Polarisationszuständen (7) nach Anspruch 1, **dadurch gekennzeichnet, dass** der radiale und azimutale Polarisationswandler (3) eine erste kartesische Symmetriefläche (3a) und eine zweite Kreissymmetriefläche (3b) umfasst, und dadurch, dass die optischen Kompensationsmittel (6), die eigene Polarisationsachsen aufweisen, auf der Seite der kartesischen Fläche (3a) des radialen und azimutalen Polarisationswandlers (3) angeordnet sind, wobei die eigenen Achsen der optischen Kompensationsmittel (6) in Bezug zu den eigenen Achsen der kartesischen Fläche (3a) ausgerichtet sind.

3. Kartesisch-zylindrischer Polarisationswandler (7) nach Anspruch 1 oder 2, **dadurch gekennzeichnet, dass** der radiale und azimutale Polarisationswandler (3) einen Flüssigkristallwandler umfasst, der eine erste Fläche (3a), die eine geradlinige Ausrichtung von Flüssigkristallen aufweist, und eine zweite Fläche (3b) aufweist, die eine Ausrichtung entlang konzentrischer Kreise von Flüssigkristallen aufweist.

4. Kartesisch-zylindrischer Polarisationswandler (7) nach einem der Ansprüche 1 bis 3, **dadurch gekennzeichnet, dass** die optischen Kompensationsmittel (6) eine doppelbrechende Platte umfassen, die zwei eigene Achsen aufweist, wobei die doppelbrechende Platte geeignet ist, um eine Verzögerung zwischen linearen Polarisationen, die entlang ihrer eigenen Achsen ausgerichtet sind, einzuführen, wobei die doppelbrechende Platte auf der Seite der ersten kartesischen Fläche (3a) des radialen und azimutalen Wandlers (3) angeordnet ist.

5. Kartesisch-zylindrischer Polarisationswandler (7) nach Anspruch 4, **dadurch gekennzeichnet, dass** die doppelbrechende Platte eine Dicke aufweist, die geeignet ist, um die Verzögerung des radialen und azimutalen Polarisationswandlers über einen Wellenlängenbereich zu kompensieren, derart, dass der kartesisch-zylindrische Polarisationswandler auf dem Wellenlängenbereich achromatisch gemacht wird.

6. Kartesisch-zylindrischer Polarisationswandler (7) nach einem der Ansprüche 1 bis 5, **dadurch gekennzeichnet, dass** die optischen Kompensationsmittel (6) eine Flüssigkristallzelle umfassen.

7. System, das einen kartesisch-zylindrischen Polarisationswandler (7) nach einem der Ansprüche 1 bis 6 umfasst, wobei das optische System **dadurch gekennzeichnet ist, dass** es mindestens ein Polarisationstrennfilter umfasst.

8. System, das einen kartesisch-zylindrischen Polarisationswandler (7) nach einem der Ansprüche 1 bis 6 umfasst, wobei das optische System **dadurch gekennzeichnet ist, dass** es mindestens eine optische Linse (4) umfasst, die auf der Symmetrieachse (10) des radialen Polarisationswandlers (3) zentriert ist, wobei die Linse (4) auf der Seite einer zylindrischen Fläche (3b) des radialen Wandlers (3) angeordnet ist.

9. Mikroskopobjektiv mit kartesisch-zylindrischem Polarisationszustandswandler, das einen kartesisch-zylindrischen Polarisationswandler (7) nach einem der Ansprüche 1 bis 6 und eine mechanische Fassung umfasst, die angepasst ist, um auf einem Mikroskop befestigt zu werden.

10. Umwandlungsverfahren für kartesisch-zylindrische Polarisation, das einen Wandler nach Anspruch 7 verwendet, der einen radialen und azimutalen Polarisationswandler (3) und optische Mittel (6) zur Kompensation der Verzögerung zwischen der radialen und azimutalen Polarisation umfasst, die durch den radialen und azimutalen Polarisationswandler (3) bewirkt wird, wobei die optischen Kompensationsmittel (6) geeignet sind, um eine räumlich gleichförmige Phasenverschiebung mit einer Amplitude gleich -χ einzuführen, derart, dass die Amplitude der Phasenverschiebung χ, die durch den radialen und azimutalen Polarisationswandler (3) eingeführt wird, kompensiert wird, um einen Strahl, der eine gleichförmige räumliche Polarisationszustandsverteilung aufweist, entlang einer ersten Ausbreitungsrichtung in einen Strahl umzuwandeln, der eine räumliche Verteilung mit zylindrischer Symmetrie mit demselben Polarisationszustand aufweist, und, um einen Strahl, der eine räumliche Polarisationszustandsverteilung mit allgemein zylindrischer Symmetrie aufweist, entlang einer zweiten Ausbreitungsrichtung in einen Strahl umzuwandeln, der eine gleichförmige räumliche Verteilung mit demselben Polarisationszustand aufweist.

**Claims**

1. A bidirectional, cartesian-cylindrical polarization state spatial distribution converter (7) capable of converting, in a first sense of propagation, a beam having a uniform polarization state spatial distribution into a beam having a generalized cylindrical symmetry polarization state spatial distribution, and said cartesian-cylindrical converter (7) being capable of converting, in a second sense of propagation, a beam having a generalized cylindrical symmetry polarization state spatial distribution into a beam having a uniform polarization state spatial distribution, said cartesian-cylindrical converter (7) comprising:

- a radial and azimuthal polarization converter (3) having an axis of symmetry (10), said radial and azimuthal polarization converter (3) being capable of receiving a linearly polarized beam of spatially uniform polarization distribution to convert it into a beam having a radial or azimuthal symmetry polarization distribution, and
- optical means (6) for compensating for the retardance induced by said radial and azimuthal polarization converter (3), said optical compensation means (6) being capable of introducing a spatially uniform phase shift of amplitude equal to $-\chi$ so as to compensate for the amplitude of the phase shift $\chi$ introduced by said radial and azimuthal polarization converter (3).

2. The cartesian-cylindrical polarization state spatial distribution converter (7) according to claim 1, **characterized in that** the radial and azimuthal polarization converter (3) comprises a first cartesian symmetry face (3a) and a second circular symmetry face (3b), and **in that** said optical compensation means (6) having eigen axes of polarization are arranged on the side of the cartesian face (3a) of the radial and azimuthal polarization converter (3), the eigen axes of the optical compensation means (6) being aligned with respect to the eigen axes of said cartesian face (3a).

3. The cartesian-cylindrical polarization converter (7) according to claim 1 or 2, **characterized in that** the radial and azimuthal polarization converter (3) comprises a liquid crystal converter having a first face (3a) with a rectilinear alignment of liquid crystals and a second face (3b) with an alignment of liquid crystals in concentric circles.

4. The cartesian-cylindrical polarization converter (7) according to one of claims 1 to 3, **characterized in that** the optical compensation means (6) comprise a birefringent plate with two eigen axes, said birefringent plate being capable of introducing a retardance between linear polarizations oriented according to its eigen axes, said birefringent plate being arranged on the side of the first cartesian face (3a) of said radial and azimuthal converter (3).

5. The cartesian-cylindrical polarization converter (7) according to claim 4, **characterized in that** said birefringent plate has a thickness capable of compensating for the retardance of the radial and azimuthal polarization converter over a wavelength range, so as to make the cartesian-cylindrical polarization converter achromatic over said wavelength range.

6. The cartesian-cylindrical polarization converter (7) according to one of claims 1 to 5, **characterized in that** the optical compensation means (6) comprise a liquid crystal cell.

7. An optical system comprising a cartesian-cylindrical polarization converter (7) according to one of claims 1 to 6, said optical system being **characterized in that** it comprises at least one polarization beam splitting filter.

8. An optical system comprising a cartesian-cylindrical polarization converter (7) according to one of claims 1 to 6, said optical system being **characterized in that** it comprises at least one optical lens (4) centered on the axis of symmetry (10) of the radial polarization converter (3), the lens (4) being arranged on the side of the cylindrical face (3b) of the radial converter (3).

9. A cartesian-cylindrical polarization state converter microscope objective comprising a cartesian-cylindrical polarization converter according to one of claims 1 to 6, and a mechanical mount adapted to be fixed on a microscope.

10. A method of cartesian-cylindrical polarization conversion using a converter according to claim 1, comprising a radial and azimuthal polarization converter (3) and optical means (6) for compensating for the retardance between the radial and azimuthal polarizations induced by said radial and azimuthal polarization converter (3), said optical compensation means (6) being capable of introducing a spatially uniform phase shift of amplitude equal to $-\chi$ so as to compensate for the amplitude of the phase shift $\chi$ introduced by said radial and azimuthal polarization converter (3), to convert, in a first sense of propagation, a beam having a uniform polarization state spatial distribution into a beam having a cylindrical symmetry spatial distribution of the same polarization state and to convert, in a second sense of propagation, a beam having a generalized cylindrical symmetry polarization state spatial distribution into a beam having a uniform spatial distribution with the same polarization state.

3b

3

3a

$u_\varphi$

$u_r$

$u_y$

$u_x$

y

x

$\varphi$

1A

1B

Figure 1

10

y

x

p

s

2

4

p

$\theta$

s

$\varphi$

5

Figure 2

Figure 3

Figure 4

7

8

19

10

6

3b

3a

3

Figure 5

10

6

7

3

4

Figure 6

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070115551 A

- US 7570427 B1

**Littérature non-brevet citée dans la description**

- **M. LERMAN ; U. LEVY.** Generation of a radially polarized light beam using space-variant subwavelength gratings at 1064 nm. *Optics Letters,* 2008, vol. 33 (23), 2783-2784
- **M. STALDER ; M. SCHADT.** Linearly polarized light with axial symmetry generated by liquid-crystal polarization converters. *Optics Letters,* 1996, vol. 21 (23), 1948-1950

- **S-W. KO ; C. TING ; A. FUH ; T. LIN.** Polarization converters based on axially symmetric twisterd nematic liquid crystal. *Optics express,* 2010, vol. 18, 3601